# EUROPÄISCHE PATENTSCHRIFT

(11) **EP 1 538 304 B1**
(45) Veröffentlichungstag und Bekanntmachung des Hinweises auf die Patenterteilung: **27.07.2016**
(21) Anmeldenummer: 04105626.8
(22) Anmeldetag: 09.11.2004
(51) Int. Cl.: F01D 5/16, F01D 5/26

(54) **Dämpfungsanordnung für eine Schaufel einer Axialturbine**
Damping arrangement for a blade of an axial turbine
Elément amortisseur pour une aube d'une turbine axiale

(30) Priorität: 02.12.2003 DE 10356237
(43) Veröffentlichungstag der Anmeldung: 08.06.2005
(73) Patentinhaber: ALSTOM Technology Ltd, 5400 Baden (CH)
(72) Erfinder: Masserey, Pierre-Alain, 5436, Würenlos (CH); Szwedowicz, Dariusz, C.P. 62490, Cuernavaca, Morelos (CH); Szwedowicz, Jaroslaw, 5415, Nussbaumen (CH)
(74) Vertreter: Bernotti, Andrea

(56) Entgegenhaltungen:
- EP-A2- 0 757 160
- JP-A- 10 047 004
- JP-A- 55 046 042
- JP-A- 63 012 803
- US-A- 2 984 453
- US-A- 5 407 321

## Beschreibung

### TECHNISCHES GEBIET

Die vorliegende Erfindung bezieht sich auf das Gebiet der Turbinentechnik. Sie betrifft eine Dämpfungsanordnung für eine Schaufel einer Axialturbine gemäss dem Oberbegriff des Anspruchs 1.

### STAND DER TECHNIK

Die Laufschaufeln von Axialturbinen, z. B. Gasturbinen, erstrecken sich in radialer Richtung und sind auf dem äusseren Umfang des sich um die Rotorachse drehenden Rotors montiert. Sie können als frei stehende Schaufelblätter in einer Turbinenstufe ausgebildet sein, können aber auch am äusseren Umfang durch einen Abdeckring ("shroud"), eine Dämpfungseinrichtung ("snubber") oder einen Haltedraht ("lacing wire") untereinander verbunden sein.

Die Schaufeln werden während des Betriebs der Turbine durch die Wechselwirkung mit dem in hoher Geschwindigkeit durch die Turbine strömenden Medium und die schnelle Rotation zu Schwingungen angeregt, die Schaufeln und Lager belasten und sich nachteilig auf den Wirkungsgrad auswirken. Es sind deshalb in der Vergangenheit bereits verschiedene Vorschläge gemacht worden, die in den Schaufeln auftretenden Schwingungen zu dämpfen. Einige dieser Vorschläge beschränken sich darauf, spezielle Dämpfungselemente im Bereich der Schaufel befestigung vorzusehen. Dies hat zwar den Vorteil, dass am Schaufelblatt selbst keine Änderungen vorgenommen werden müssen. Nachteilig ist jedoch, dass Schwingungen im Schaufelblatt nur sehr indirekt beeinflusst werden können.

Man ist daher bei anderen Vorschlägen dazu übergegangen, im Schaufelblatt selbst Dämpfungselemente anzuordnen und unterzubringen, welche die Schwingungen im Schaufelblatt direkt beeinflussen. So ist aus der EP-B1-0 727 563 eine Dämpfungsanordnung für die Rotorschaufeln einer Turbine bekannt, bei der im äusseren Drittel des Schaufelblatts auf der Mitte der Druckseite eine kreisrunde Ausnehmung oder Tasche angeordnet ist, die ein (sinusförmiges) Dämpfungselement aufnimmt. Die Tasche ist nach aussen durch einen der Schaufelblattkontur angepassten Taschendeckel verschlossen. Das Dämpfungselement liegt an einigen Stellen an den Innenwänden der Tasche und des Taschendeckels an und dämpft bei seiner Bewegung relativ zur Schaufel durch Reibung an den Wänden die im Schaufelblatt entstehenden Schwingungen. Nachteilig bei dieser bekannten Dämpfungsanordnung ist der aufwändige Aufbau von Tasche und Taschendeckel sowie die räumliche Beschränkung des Dämpfungselements auf einen sehr kleinen Bereich des Schaufelblattes.

Ohne einen Deckel kommt demgegenüber die in der US-B1-6,607,359 vorgeschlagene Lösung aus, bei der ein einfach geformtes Dämpfungselement so in eine speziell vorbereitete Tasche eingeschoben wird, dass die nach aussen gerichtete Oberfläche des Dämpfungselements nahtlos an die druckseitige Fläche des Schaufelblattes anschliesst. Auch diese Lösung erfordert eine aufwändige und genaue Bearbeitung der einzelnen Elemente der Dämpfungseinrichtung und ermöglicht lediglich eine lokal begrenzte Dämpfung.

In der WO-A1-01/49975 wird auf der Saugseite der Schaufel durch Erzeugen einer Ausnehmung und anschliessendes Verschliessen (Zuschweissen) mit einem Deckel eine schmale Luftkammer ausgebildet, die bei auftretenden Schaufelschwingungen aufgrund der Viskosität der sich bewegenden Luft dämpfend wirkt. Diese Art der Dämpfung ist wenig flexibel und erfordert ebenfalls eine aufwändige und genaue Bearbeitung bzw. Nachbearbeitung der Schaufeloberfläche, um strömungstechnische Nachteile durch den Einbau der Dämpfungseinrichtung zu vermeiden.

Zusammenfassend kann gesagt werden, dass bei den o.g. Lösungen einerseits wegen des Eingriffs in die strömungstechnisch wichtige Schaufeloberfläche eine aufwändige und sorgfältige Bearbeitung notwendig ist, und andererseits eine Dämpfung nur in eng begrenzten Bereichen realisiert werden kann.

Aus der US 5,407,321 eine Schaufel bekanntgeworden, bei der in einen hohlen Innenraum der Schaufel ein U- oder V-förmiges Element unter Spannung der Schenkel des Elements eingesetzt ist. Durch Reibung zwischen der Innenfläche des hohlen Schaufelblatts und den Schenkeln des Elements wird Schwingungsenergie dissipiert und derart werden Schaufelschwingungen gedämpft.

Die JP 5546042 offenbart eine Schaufel, bei der das Schaufelblatt eine zylindrische Längsbohrung aufweist, in die ein zylindrisches Dämpfungselement eingesetzt ist. Das Dämpfungselement ist vom Schaufelfuss her durch ein Formschlusselement in der Bohrung fixiert. Eine im Wesentlichen identische Lehre ist der JP 63-12803 zu entnehmen.

Gemäss der Lehre der JP 10-47004 sind ebenfalls zylindrische Elemente in zylindrische Längsbohrungen des Schaufelblatts eingebracht.

Aus der US 2,984,453 ist bekanntgeworden, im Inneren eines Schufelblattes Dämpfungselemente anzuordnen, die beispielsweise aus einem Granulat geformt sind und derart Schwingungsenergie durch innere Reibung zu dissipieren vermögen.

### DARSTELLUNG DER ERFINDUNG

Es ist daher Aufgabe der Erfindung, eine Dämpfungsanordnung für Schaufeln von Axialturbinen anzugeben, welche einfach im Aufbau, in der Wirkung effektiv und über einen grossen Bereich des Schaufelblattes wirksam ist.

Die Aufgabe wird durch die Gesamtheit der Merkmale des Anspruchs 1 gelöst.
Der Kern der Erfindung besteht darin, das Dämpfungselement der Dämpfungsanordnung in einer Ausnehmung unterzubringen, welche als in radialer Richtung durch das Innere des Schaufelblattes sich erstreckender Hohlraum ausgebildet ist, in welchen das Dämpfungselement in radialer Richtung eingesetzt ist. Durch den sich in radialer Richtung erstreckenden Hohlraum, in den das Dämpfungselement in radialer Richtung eingeführt wird, ist die äussere Kontur des Schaufelblattes von der Dämpfungsvorrichtung unbeeinflusst. Da sich der Hohlraum über weite Strecken des Schaufelblattes erstreckt, können die Schwingungen im gesamten Schaufelblatt sehr effektiv gedämpft werden. Der Hohlraum und das in den Hohlraum eingesetzte Dämpfungselement sind zylindrisch ausgebildet. Hierdurch werden Herstellung und Einbau der Dämpfungseinrichtung noch weiter vereinfacht. Die Erfindung ist dadurch gekennzeichnet, dass das Dämpfungselement derart ausgebildet ist, dass der dämpfende Reibungsprozess im wesentlichen zwischen dem Dämpfungselement und der Wand des Hohlraums stattfindet. Das Dämpfungselement ist dabei vorzugsweise einstückig ausgebildet und drückt federnd gegen die Wand des Hohlraums, wobei das Dämpfungselement als ein um die Zylinderachse gewickeltes Blech aus einem Federmaterial, insbesondere Federstahl, ausgebildet ist.

Eine erste Weiterbildung der Erfindung zeichnet sich dadurch aus, dass das Dämpfungselement so ausgebildet ist, dass der dämpfende Reibungsprozess im Inneren des Dämpfungselements stattfindet, wobei vorzugsweise das Dämpfungselement ein dämpfendes Material, insbesondere in Form einer hochviskosen Flüssigkeit, enthält. Anders als beim bekannten Stand der Technik (siehe die WO-A1-01/49975) kann das das dämpfende Medium enthaltende Element separat von der Schaufel auf einfache Weise hergestellt und sehr einfach in die Schaufel eingebracht werden.

Der Hohlraum kann je nach Bedarf vom inneren oder äusseren Ende der Schaufel zugänglich sein. Im einen Fall umfasst die Schaufel in radialer Richtung von innen nach aussen hintereinander angeordnet einen Schaft, eine Plattform und das Schaufelblatt. Der Hohlraum zur Aufnahme des Dämpfungselements erstreckt sich dann vom äusseren Ende des Schaufelblattes aus durch das Schaufelblatt hindurch bis in die Nähe der Plattform und ist nur vom äusseren Ende des Schaufelblattes aus zugänglich. Der Hohlraum ist dabei am äusseren Ende des Schaufelblattes durch ein Verschlusselement verschliessbar. In diesem Fall wird zwar ein zusätzliches Verschlusselement benötigt. Die Dämpfungseinrichtung kann jedoch montiert bzw. verändert werden, wenn die Schaufel bereits auf dem Rotor befestigt ist.

Im anderen Fall erstreckt sich bei gleicher Schaufelkonfiguration der Hohlraum zur Aufnahme des Dämpfungselements vom inneren Ende des Schaftes aus bis weit in das Schaufelblatt hinein und ist nur vom inneren Ende des Schaftes aus zugänglich. In diesem Fall muss das Dämpfungselement vor der Montage der Schaufel auf dem Rotor eingebaut werden. Dafür kann jedoch auf ein Verschlusselement verzichtet werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: die teilweise geschnittene Seitenansicht einer Turbinenschaufel mit einer radialen Dämpfungsanordnung gemäss einem ersten bevorzugten Ausführungsbreispiel der Erfindung;
- Fig. 2: den Querschnitt durch die Dämpfungsanordnung nach Fig. 1 in der Ebene A-A in der Gesamtansicht und in einem vergrösserten Ausschnitt und
- Fig. 3: eine zu Fig. 1 analoge Seitenansicht einer Turbinenschaufel mit einer radialen Dämpfungsanordnung gemäss einem zweiten bevorzugten Ausführungsbreispiel der Erfindung (der Schnitt durch die Ebene A-A entspricht wiederum dem in Fig. 2 dargestellten).

### WEGE ZUR AUSFÜHRUNG DER ERFINDUNG

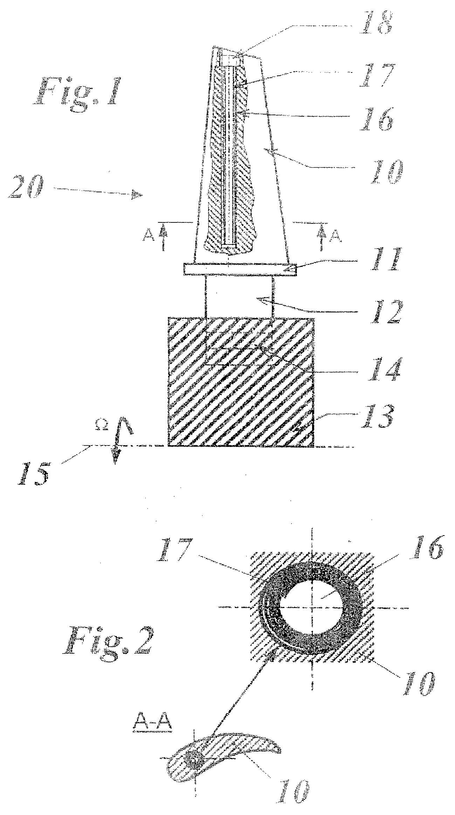

Die vorliegende Erfindung bezieht sich auf eine Schaufelanordnung mit einer Dämpfungsvorrichtung. Gemäss Fig. 1 ist eine Schaufel 20 als Axialschaufel am Umfang eines Rotorabschnitts 13 eines um eine Rotorachse 15 mit der Winkelgeschwindigkeit Ω drehenden Rotors montiert und erstreckt sich in radialer Richtung. Die Schaufel 20 umfasst in radialer Richtung von innen nach aussen aufeinanderfolgend einen Schaft 12, eine Plattform 11 und das eigentliche Schaufelblatt 10. Die Schaufel 20 ist mit einem üblicherweise tannenbaumartig ausgeformten Schaufelfuss 14 am unteren Ende des Schaftes 12 in eine entsprechende Ausnehmung im Rotorabschnitt 13 eingesetzt. Die Schaufelblätter 10 der in einem Kranz um die Rotorachse 15 angeordneten Schaufeln einer Turbinenstufe können entweder freistehend ausgebildet sein, oder untereinander an den Schaufelspitzen durch ein Deckband, eine Dämpfungseinrichtung oder einen Haltedraht verbunden sein.

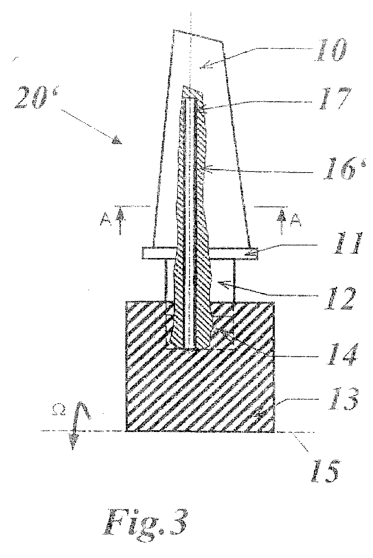

In der radialen Richtung verlaufend hat jede Schaufel 20 einen zylindrischen Hohlraum 16, der innerhalb des Schaufelblattes 10 angeordnet ist. Der Hohlraum 16 kann von der Schaufelspitze her gebohrt, erodiert oder beim Giessen der Schaufel 20 erzeugt werden. Er kann aber auch - wie dies beim Hohlraum 16' der Schaufel 20' in Fig. 3 gezeigt ist - auf dieselbe Weise vom Schaufelfuss 14 her in die Schaufel 20' eingebracht werden. Da die maximale statische und dynamische Belastung üblicherweise an der äusseren Berandung des Schaufelblattes 10 auftritt, schwächt der im Inneren des Schaufelblattes 10 angeordnete Hohlraum 16 bzw. 16' die Festigkeit der Schaufel nicht.

Das im zylindrischen Hohlraum 16 bzw. 16' untergebrachte zylindrische Dämpfungselement 17 besteht aus einem (z. B. rechteckigen) Blech aus Federstahl. Das Blech ist um die Zylinderachse aufgerollt in eine Zyli nderform, so dass eine zylinderförmige Reibungsfeder erzeugt wird (vergrösserter Ausschnitt in Fig. 2). Die so erhaltene zylindrische Feder wird (unter Federspannung) in den Hohlraum 16 bzw. 16' eingeschoben. Sie entrollt sich innerhalb des Hohlraums 16 bzw. 16' wieder teilweise und übt so einen Kontaktdruck auf die Wand des Hohlraums 16 bzw. 16' aus. Gleichzeitig drücken die Windungen der Feder gegeneinander.

Für den von der Schaufelspitze her in das Schaufelblatt 10 hineinreichenden Hohlraum 16 (Fig. 1) wird der Hohlraum 16 durch ein Verschlusselement 18 verschlossen, das als Schraubbolzen in ein entsprechendes Gewindeloch einschraubbar ist. Das Gewinde des Schraubbolzens kann beschädigt sein, um ein selbständiges Lösen des Bolzens aufgrund von Schaufelschwingungen zu verhindern. Alternativ dazu kann das Verschlusselement 18 aber auch festgeschweisst werden, sofern die Schaufel 10 aus einer schweissbaren Legierung ist. Wenn der Hohlraum 16' vom Schaufelfuss 14 her in die Schaufel 10 hineinreicht (Fig. 3), ist ein Verschlusselement nicht nötig, da der Hohlraum 16' mit dem Dämpfungselement 17 durch den Rotorabschnitt 13 geschlossen wird, sobald die Schaufel 20' am Rotor befestigt wird.

Wenn nun während des Betriebs der Turbine die Schaufel 20 bzw. 20' an zu schwingen fängt, entsteht eine schleifende Relativbewegung zwischen der Innenwand des Hohlraums 16 bzw. 16' und den Windungen des Dämpfungselements 17 (der Reibungsfeder). Die Dämpfungsgüte des Dämpfungselements 17 hängt vom Reibungskoeffizienten und dem Kontaktdruck ab. Der Kontaktdruck wird durch das selbsttätige Abwickeln des Dämpfungselements aufgrund der Federsparinung nach dem Einschieben in den Hohlraum 16 bzw. 16' aufgebaut. Die Höhe des Kontaktdrucks hängt daher von der Anzahl der Windungen ab und kann auf einfache Weise in Abhängigkeit von den Abmessungen des Schaufelblatts 10 variiert werden. Für die verschiedenen in Reibungskontakt stehenden Materialen der Dämpfungsanordnung (Federstahl, Schaufellegierung) sind die Reibungskoeffizienten in Abhängigkeit von der Temperatur aus der Literatur bekannt. Um die effektiven Dämpfungseigenschaften des Dämpfungselements 17 zu erhalten, kann der optimale Wert des Kontaktdrucks experimentell durch Hammertest bestätigt werden.

Eine andere Möglichkeit der Dämpfung im Rahmen der Erfindung besteht darin, anstelle der zylindrischen Reibungsfeder ein (in den Fig. 1-3 nicht dargestelltes) Dämpfungselement in den zylindrischen Hohlraum 16 bzw. 16' einzusetzen, das nicht durch eine Reibung mit der Innenwand des Hohlraums dämpft, sondern durch einen im Dämpfungselement selber stattfindenden Reibungsprozess. Ein solcher interner Reibungsprozess kann beispielsweise durch eine im Inneren des Dämpfungselements untergebrachte hochviskose Flüssigkeit wie z. B. ein Öl oder ein anderes dämpfendes Material hervorgerufen werden.

Im Vergleich zu den bisher bekannten Dämpfungsanordnungen für Turbinenschaufeln zeichnet sich die vorliegende neue Lösung durch folgende Vorteile aus:
1. Der Kontakt zwischen dem Schaufelblatt und dem Dämpfungselement und das Dämpfungselement selbst sind gegen den Einfluss von Gas, Dampf, oder Abgasströmungen geschützt. Dadurch können bestimmte Unwägbarkeiten im Bezug auf eine sichere Funktion der Dämpfungsvorrichtung ausgeschlossen werden.
2. Das Dämpfungselement kann verschiedene Biegeschwingungen des Schaufelblattes wirkungsvoll unterbinden und seine Wirksamkeit ist dabei unabhängig von Plattenschwingungen, die mittels Knotendurchmessern beschrieben werden können.
3. Die Wirksamkeit des Dämpfungselements hängt nicht direkt von der Rotationsgeschwindigkeit der mit den Schaufeln bestückten Scheibe ab. Das Dämpfungselement kann daher für einen breiten Bereich von Rotationsgeschwindigkeiten eingesetzt werden. Dies ist besonders wichtig bei Turbinen, die mit veränderlicher Drehzahl arbeiten, wie z. B. Flugzeugtriebwerke.
4. Im Falle eines Ausfalls des Dämpfungselements bleiben alle beschädigten Teile in dem geschlossenen Hohlraum und können so nicht die Turbinenschaufeln beschädigen.
5. Da die Wirksamkeit der Dämpfung weniger von der Rotationsgeschwindigkeit abhängt, kann anstelle des Bleches aus Federstahl eine mehrschichtige Platte oder ein anderes Material eingesetzt werden, um die Dämpfungseigenschaften des Dämpfungselements zu verbessern.

### BEZUGSZEICHENLISTE

- 10: Schaufelblatt
- 11: Plattform
- 12: Schaft
- 13: Rotorabschnitt
- 14: Schaufelfuss
- 15: Rotorachse
- 16,16': Hohlraum (zylindrisch, radial)
- 17: Dämpfungselement (federförmig)
- 18: Verschlusselement
- 20,20': Schaufel (Axialturbine)

## Patentansprüche

1. Dämpfungsanordnung für eine Schaufel (20, 20') einer Axialturbine, insbesondere einer Gasturbine, welche Dämpfungsanordnung eine Schaufel mit einem Schaufelblatt sowie ein Dämpfungselement (17) umfasst, wobei sich die Schaufel in einer radialen Richtung erstreckt, wobei das Dämpfungselement in einer Ausnehmung (16, 16') im Schaufelblatt (10) der Schaufel (20, 20') angeordnet ist und unter Ausnutzung eines Reibungsprozesses Schwingungen der Schaufel (20, 20') dämpft, wobei die Ausnehmung als in radialer Richtung durch das Innere des Schaufelblattes (10) sich erstreckender Hohlraum (16, 16') ausgebildet ist, in welchen das Dämpfungselement (17) in radialer Richtung eingesetzt ist, wobei der Hohlraum (16, 16') und das in den Hohlraum (16, 16') eingesetzte Dämpfungselement (17) zylindrisch ausgebildet sind, das Dämpfungselement (17) derart ausgebildet ist, dass der dämpfende Reibungsprozess im wesentlichen zwischen dem Dämpfungselement (17) und der Wand des Hohlraums (16, 16') stattfindet und das Dämpfungselement (17) federnd gegen die Wand des Hohlraums (16, 16') drückt, **dadurch gekennzeichnet, dass** das Dämpfungselement (17) als ein um die Zylinderachse gewickeltes Blech aus einem Federmaterial, insbesondere Federstahl, ausgebildet ist.

2. Dämpfungsanordnung nach Anspruch 1, **dadurch gekennzeichnet, dass** das Dämpfungselement (17) einstückig ausgebildet ist.

3. Dämpfungsanordnung nach einem der vorstehenden Ansprüche, **dadurch gekennzeichnet, dass** die Schaufel (20, 20') in radialer Richtung von innen nach aussen hintereinander angeordnet einen Schaft (12), eine Plattform (11) und das Schaufelblatt (10) umfasst, dass sich der Hohlraum (16, 16') zur Aufnahme des Dämpfungselements (17) vom äusseren Ende des Schaufelblattes (10) aus durch das Schaufelblatt (10) hindurch bis in die Nähe der Plattform (11) erstreckt und nur vom äusseren Ende des Schaufelblattes (10) aus zugänglich ist, und dass der Hohlraum (16, 16') am äusseren Ende des Schaufelblattes (10) durch ein Verschlusselement (18) verschliessbar ist.

4. Dämpfungsanordnung nach einem der Ansprüche 1 oder 2, **dadurch gekennzeichnet, dass** die Schaufel (20, 20') in radialer Richtung von innen nach aussen hintereinander angeordnet einen Schaft (12), eine Plattform (11) und das Schaufelblatt (10) umfasst, und dass sich der Hohlraum (16, 16') zur Aufnahme des Dämpfungselements (17) vom inneren Ende des Schaftes (12) aus bis weit in das Schaufelblatt (10) hinein erstreckt und nur vom inneren Ende des Schaftes (12) aus zugänglich ist.

5. Rotor für eine Axialturbine, umfassend eine Schaufel (20), die am Umfang eines Rotorabschnitts (13) des Rotors montiert ist, **dadurch gekennzeichnet, dass** die Schaufel eine Dämpfungsanordnung gemäss einem der vorstehenden Ansprüche umfasst.

## Claims

1. Damping arrangement for a vane (20, 20') of an axial turbine, in particular a gas turbine, which damping arrangement comprises a vane with a vane blade and damping element (17), wherein the vane extends in a radial direction, wherein the damping element is arranged in a recess (16, 16') in the vane blade (10) of the vane (20, 20') and damps vibrations of the vane (20, 20') using a friction process, wherein the recess is formed as a cavity (16, 16') which extends in the radial direction through the interior of the vane blade (10) and in which the damping element (17) is inserted in the radial direction, wherein the cavity (16, 16') and the damping element (17) inserted in the cavity (16, 16') are formed cylindrical, the damping element (17) is configured such that the damping friction process takes place substantially between the damping element (17) and the wall of the cavity (16, 16'), and the damping element (17) presses elastically against the wall of the cavity (16, 16'), **characterised in that** the damping element (17) is configured as a plate wound about the cylinder axis and made of a spring material, in particular spring steel.

2. Damping arrangement according to claim 1, **characterised in that** the damping element (17) is formed integrally.

3. Damping element according to one of the preceding claims, **characterised in that** the vane (20, 20') comprises, arranged successively in the radial direction from inside to outside, a shank (12), a platform (11) and the vane blade (10), that the cavity (16, 16') for receiving the damping element (17) extends from the outer end of the vane blade (10) through the vane blade (10) up to the vicinity of the platform (11) and is only accessible from the outer end of the vane blade (10), and that the cavity (16, 16') can be closed at the outer end of the vane blade (10) by a closing element (18).

4. Damping arrangement according to one of claims 1 or 2, **characterised in that** the vane (20, 20') comprises, arranged successively in the radial direction from inside to outside, a shank (12), a platform (11) and the vane blade (10), and that the cavity (16, 16') for receiving the damping element (17) extends from the inner end of the shank (12) up to far into vane blade (10), and is only accessible from the inner end of the shank (12).

5. Rotor for an axial turbine, comprising a vane (20) which is mounted on the periphery of a rotor portion (13) of the rotor, **characterised in that** the vane has a damping arrangement according to any of the preceding claims.

## Revendications

1. Dispositif d'amortissement pour une aube (20, 20') d'une turbine axiale, plus particulièrement d'une turbine à gaz, ce dispositif d'amortissement comprenant une aube avec une pale ainsi qu'un élément d'amortissement (17), l'aube s'étendant dans une direction radiale, l'élément d'amortissement étant disposé dans un évidement (16, 16') dans la pale (10) de l'aube (20, 20') et amortissant les vibrations de l'aube (20, 20') à l'aide d'un processus de friction, l'évidement étant conçu comme un espace creux (16, 16') s'étendant dans la direction radiale à travers l'intérieur de la pale (10), dans lequel l'élément d'amortissement (17) est inséré dans la direction radiale, l'espace creux (16, 16') et l'élément d'amortissement (17) inséré dans l'espace creux (16, 16') étant conçus de manière cylindrique, l'élément d'amortissement (17) étant conçu de façon à ce que le processus de friction amortisseur ait lieu essentiellement entre l'élément d'amortissement (17) et la paroi de l'espace creux (16, 16') et à ce que l'élément d'amortissement (17) s'appuie de manière élastique contre la paroi de l'espace creux (16, 16'), **caractérisé en ce que** l'élément d'amortissement (17) est conçu comme une tôle, enroulée autour d'un axe cylindrique, constituée d'un matériau ressort, plus particulièrement un acier ressort.

2. Dispositif d'amortissement selon la revendication 1, **caractérisé en ce que** l'élément d'amortissement (17) est conçu d'une seule pièce.

3. Dispositif d'amortissement selon l'une des revendications précédentes, **caractérisé en ce que** l'aube (20, 20') comprend, successivement de l'intérieur vers l'extérieur dans la direction radiale, une tige (12), une plate-forme (11) et la pale (10), **en ce que** l'espace creux (16, 16') s'étend, pour le logement de l'élément d'amortissement (17), de l'extrémité externe de la pale (10), à travers la pale (10) jusqu'à proximité de la plate-forme (11) et n'est accessible que de l'extrémité externe de la pale (10) et **en ce que** l'espace creux (16, 16') peut être obturé, au niveau de l'extrémité externe de la pale (10), par un élément d'obturation (18).

4. Dispositif d'amortissement selon l'une des revendications 1 ou 2, **caractérisé en ce que** l'aube (20, 20') comprend, successivement de l'intérieur vers l'extérieur dans la direction radiale, une tige (12), une plate-forme (11) et la pale (10) et **en ce que** l'espace creux (16, 16') s'étend, pour le logement de l'élément d'amortissement (17), de l'extrémité interne de la tige (12) jusque loin à l'intérieur de la pale (10) et n'est accessible que de l'extrémité interne de la tige (12).

5. Rotor pour une turbine axiale, comprenant une aube (20), qui est montée sur la circonférence d'une portion (13) du rotor, **caractérisé en ce que** l'aube comprend un dispositif d'amortissement selon l'une des revendications précédentes.
